# EUROPEAN PATENT APPLICATION

(11) **EP 1 862 063 A1**
(43) Date of publication of application: **05.12.2007**
(21) Application number: 07109462.7
(22) Date of filing: 01.06.2007
(51) Int. Cl.: A01G 9/02

(54) **Plant tray, method for the use thereof and method for forming a plastic tray**

(30) Priority: 01.06.2006 NL 1031938
(71) Applicant: Modiform B.V., 3831 KA Leusden (NL)
(72) Inventor: Van Heugten, Petrus Johannes, 3791 PK, Achterveld (NL)
(74) Representative: van Loon, C.J.J.

(57) **Abstract**

A plant tray, in particular for epiphytes such as orchids, provided with at least one wall, a bottom and a space for a medium for epiphytes, which space is bounded, at least partly, by the wall and the bottom, the bottom being provided with openings at at least two different levels relative to the bottom.

## Description

The invention relates to a plant tray, in particular for epiphytes.

The invention also relates to a method for the use of a plant tray.

The invention further relates to a method for forming a plastic plant tray.

Epiphytes are plants that grow on other plants without deriving nutrients therefrom (this in contrast to parasites). In a broader sense, the term is also used for all plants growing on a surface other than soil. Known epiphytic plants are particular types of moss, lichen, algae, bromeliads and orchids. Certain wild orchids typically occur in the tropical rainforest and grow, for instance, in trees. Epiphytic conditions can also be copied, for instance by potting the plants in a pot with a coarse medium such as, for instance, pieces of bark, charcoal or dicksonia (a fern variety), allowing them to grow indoors as well.

Orchids are typically grown in trays with the medium mentioned, in which preferably, several orchids are present. However, these trays appear to be suitable for holding plants, especially orchids, only for a relatively short period of time.

One of the objects of the invention is to improve the conditions in a holder for epiphytes by means of an improved plant holder.

This object and other objects are achieved with a plant tray according to the invention, in particular for epiphytes such as orchids, provided with at least one wall, a bottom and a space for a medium for epiphytes, which space is bounded, at least partly, by the wall and the bottom, the bottom being provided with openings at at least two different levels relative to the bottom.

This object and other objects are also achieved with a method for the use of a plant tray according to the invention, wherein the plant tray is filled, at least partly, with epiphyte growth medium, and epiphytes are placed in the growth medium, in particular for, inter alia, growing and transporting the epiphytes.

This object and other objects are further achieved with a method for forming a plastic tray according to the invention, wherein a tray is vacuum-formed, provided with at least one wall, a bottom and a space for a medium for epiphytes, while at least one projecting part is formed in the bottom, while the tray is perforated at at least two different levels relative to the bottom.

In clarification of the invention, exemplary embodiments of an orchid tray and method according to the invention will be explained in further detail on the basis of the drawing. In the drawing:
Fig. 1 shows an orchid tray in perspective view;
Fig. 2 shows a side view in cross-section of an orchid tray in use;
Fig. 3 shows a top plan view of an orchid tray;
Fig. 4 shows a cross-section of a part of the bottom of an orchid tray with an opening with raised edge;
Fig. 5A shows an orchid tray in perspective view;
Fig. 5B shows an orchid tray in perspective view;
Fig. 6 shows an orchid tray in perspective view.

In this description, identical or corresponding parts have identical or corresponding reference numerals. In the drawing, embodiments are shown merely by way of example. The elements of the plant tray used therein are mentioned merely by way of example and should not be construed to be limitative in any manner. Other elements of the plant tray too can be utilized within the framework of the present invention. Also, the Figures only serve as explanation, while the proportions in the Figures serve only as explanation and should not be construed to be limitative in any manner.

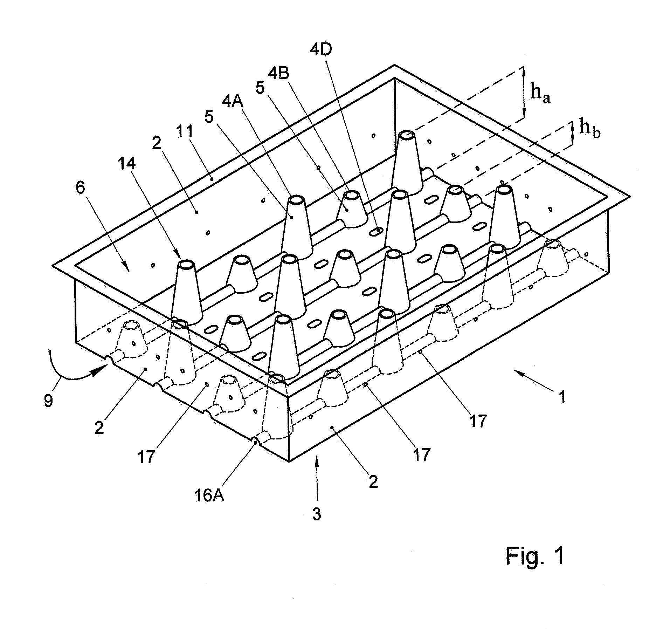

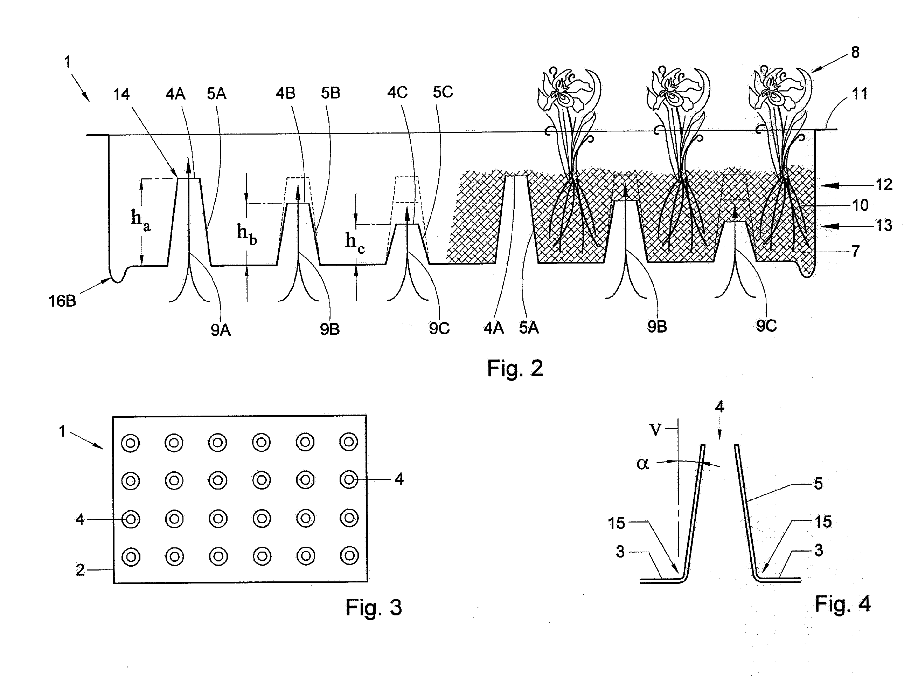

One embodiment of the plant tray 1, as shown in Fig. 1, is provided with a wall 2 and a bottom 3. The bottom 3 is provided with openings 4A, 4B and raised edges 5 of two different heights hA, hB. The edges 5 reach from the bottom 3 between the walls 2. The height h of the edges 5 extends approximately perpendicular to the bottom 3, from the bottom 4 to the end of the edges 5. The walls 2 surround a space 6 for a medium 7 for the plants 8, see also Fig. 2.

In the embodiment shown in Fig. 2, orchids 8 are placed in the medium 7, the medium 7 comprising, for instance, pieces of bark 7. Naturally, other types of plants 8 and/or medium 7 can also be utilized within the framework of the invention. Preferably, the plants 8 mentioned are epiphytes 8 and the medium 7 is suitable for cultivating this type of plant 8. This medium 7 can serve as growth medium, but also, for instance, as a sort of support for the plants 8, so that the plant 8 will not, for instance, fall into/from the tray 1 too easily.

The openings 4 allow, for instance, the passage of, inter alia, air moisture, vapours, gases 9 etc., indicated with arrows 9. In this description, by way of illustration, air 9 will be mentioned, which should not be understood to be limitative. The openings 4 are beneficial to the supply of the air 9 into the medium 7, at least near the respective opening 4, to at least an orchid 8, in particular the part of the at least one orchid 8 located near the respective opening 4, for instance the roots 10. Owing to the raised edges 5, the air 9 is supplied into the medium 7 and distributed from within. Thereto, a favourable height h of the edges can be chosen, preferably a substantial height h such as, for instance, at least approximately one fifth of the height of the walls 2. In order to distribute the air 9 in the medium 7, a favourable embodiment has edges 5 of different heights h. The supply of air 9 through openings 4 into the medium 7, in particular to the orchids 8, provides, for instance, better conditions for the orchids 8 and/or the medium 7. The air can be supplied locally as well as in a distributed manner over the medium 7 and ensures, for instance, the prevention of dehydration, that is, keeping dry, prevention of too much moisture, that is, keeping moist, etc. of at least a part of the orchids 8 and/or the medium 7. In addition, in certain embodiments, an elevated edge 5 provides additional support for the orchids 8 and holds the medium 7 together locally, so that, indirectly, also, additional support is provided for the orchids.

The embodiment of Fig. 2 shown has edges 5 with three different heights. Highest edges 5A may reach as far as relatively close to an edge 11 of the walls 2. Lowest raised edges 5C do not extend, for instance, relatively far from the bottom 3. Medium-height edges have a height hB that is between the heights hA, hC of the lowest and highest raised edges 5C, 5A. Due to these mutually different heights hA, hB, air 9 enters the medium 7 at different depths through openings 4A, 4B and 4C, respectively. Thus, air 9 can spread relatively easily through the entire medium 7, into parts 13 located deeply into the medium as well as around parts 12 of the orchid 8 and/or the roots 10 located less deeply. Several embodiments are conceivable. For instance, more than two or three different heights h mentioned of the edges 5 are possible. In the embodiment of Fig. 1, also, openings 4D without raised edges 5 are provided in the bottom 3. In a further possible embodiment, openings 17 are provided in the walls 2.

In one embodiment, specific edges 5, for instance the highest edges 5A, project to a height h such that, upon filling of the tray with the medium 7, the end of these projecting edges 5 can be seen, at least partly. In this manner, the location of the projecting edges 5 is visible, and an orchid 8 may be placed into the medium 7 next to a projecting edge 5 with relatively little hindrance from the other edges 5.

In one embodiment, the openings 4 are provided in a specific, regular pattern, so that the positioning of the openings 4 can be estimated, also when most of the openings 4, or even all openings 4, have been covered with medium 7. Fig. 3 shows a tray 1 in top plan view, with, in top plan view, a regular pattern. In one embodiment, when a space 6 is filled with medium 7 to just below the edge 11, at least one, preferably, at least two projecting edges 5 are visible, so that the position of the remaining edges 5 can be determined relative to these edges 5. As can be seen in, for instance, Fig. 2, the ends 14 of the highest edges 5A will be visible so that the position of the remaining edges 5B, 5C can be roughly estimated. Then, in a relatively simple manner, orchids 8 can be placed next to the openings 4.

Preferably, the ends 14 of the edges 5 are also, in side view, placed according to a relatively regular pattern, at least in height h, as shown in Fig. 2, so that a three-dimensionally regular pattern of ends 14 is formed. This can be seen in perspective view in Fig. 1. In this manner, it can also be estimated where particular edges 5 of particular heights h are approximately located, and where approximately the air 9 is supplied, also when the greater part of the edges 5 is covered with the medium 7.

In one embodiment, the edges 5 taper slightly from the bottom 3, as is schematically shown in Fig. 4. This means that the edge 5 is at an angle α to the plane V, while the plane V is an imaginary plane proceeding perpendicularly through the bottom 3. In principle, angle α is quite small, for instance approximately 1° to 15°, in particular 5° to 10°, however, the invention should, of course, not be limited thereto. In a further embodiment, a rounded-off transition 15 is provided between the bottom 3 and the edge 5. Owing to the tapering and/or the rounded-off transition, a tray 1 can be relatively easily withdrawn from a mould/template and is also relatively easily stackable. Also, a more rigid construction can be achieved and the supply of air 9 can be facilitated.

In order to stimulate the supply of air 9 through the openings 4, in one embodiment, elevations and/or depressions 16A, 16B are provided. In the embodiment of Fig. 1, elevations 16A are indicated which extend as a sort of ribs from the wall 2 along the openings 4. If the tray 1 is placed on a table or the like, air 9 can still pass in a relatively simple manner under the bottom 3 and through the openings 4. Naturally, many embodiments are conceivable for guiding air 9 under the bottom 3, Fig. 2 for instance shows depressions 16b in the bottom 3 which serve as a sort of legs for the tray 1. The elevations and/or depressions 16 can also serve as guide for sliding the trays 1 into racks. The wall edges 11 can also be designed to this end, as is represented in Fig. 1. Preferably, the depressions are designed such that, upon manufacture, an orchid tray 1 can be relatively easily withdrawn from the mold/template.

Preferably, the tray 1 is vacuum-formed from plastic. This is a relatively inexpensive production manner wherein a tray 1 can be produced integrally and without assembly steps. Trays 1 may also be manufactured as, for instance, disposable articles.

A manufacturing method of a tray 1 according to the invention could for instance proceed as follows. The plastic is placed in the form of a sort of plate over a mould in the shape of the tray 1. This mould may be provided with a block-shape for forming space 6, and depressions for forming the raised edges 5. Then, by means of vacuum-drawing, the plate-shape is drawn against the block-shape and into the depressions. Then, the openings 4 are to be formed by forming a hole in the center and/or at the end of the raised edges 5. This may be done by punching openings 4 with the product 1 still positioned in/around the mould, or by cutting openings 4, for instance when the product has already be taken from the mould. Naturally, the openings can also be perforated and/or punched. Naturally, in specific embodiments, the mould is provided with elevations and/or depressions and recesses of different heights h for the corresponding elevations 16A, recesses 16B and raised edges 5, respectively, of the plant tray 1.

In addition to vacuum forming, for particular embodiments, also, other production methods are possible, such as, for instance, injection molding and/or compression casting. In addition to plastic, in particular embodiments, the tray 1 can also comprise a (disposable) material based on starch, for instance slightly foamed material, or polystyrene foam.

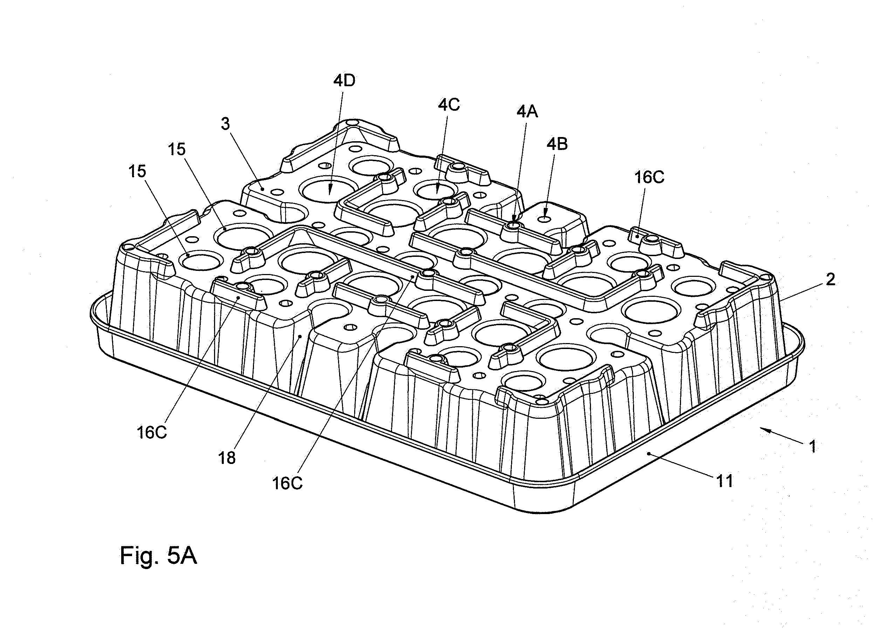

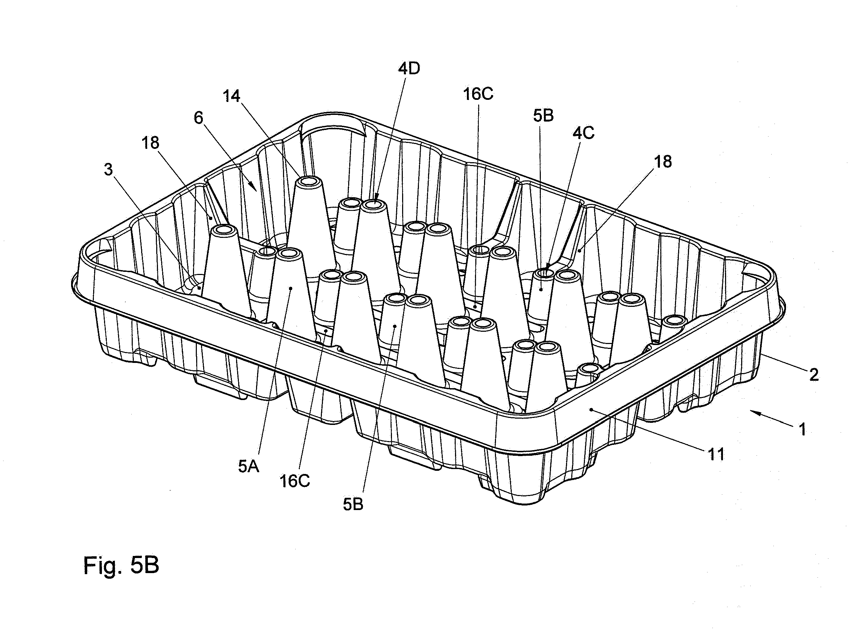

An advantageous embodiment of an orchid tray 1 is shown, for instance, in an upside down position, and in a straight position in Figs. 5A and 5B. Here, the bottom 3 is provided with openings 4A, 4B, 4C, 4D and edges 5A, 5B of different heights for supplying and venting air 9. Recesses 16C are provided so that the air 9 can pass under the bottom 3 through the openings 4A, 4B, 4C, 4D in a relatively simple manner. The recesses 16C also contribute to the rigidity of the construction of the orchid tray. At the edge 11, the orchid tray 1 can be gripped by hand and in this manner too, the nestability of the tray 1 is improved. Ribs 18 connect certain raised edges 5B to the wall, whereby additional rigidity of the orchid tray 1 is obtained. The orchid tray 1 shown in Figs. 5A and 5B is designed having six raised edges 5 in a longitudinal direction by five raised edges 5 in a transverse direction, between which raised edges 5 and the walls 2 for instance, seven by six orchids, respectively (hence, in total forty-two) can be placed.

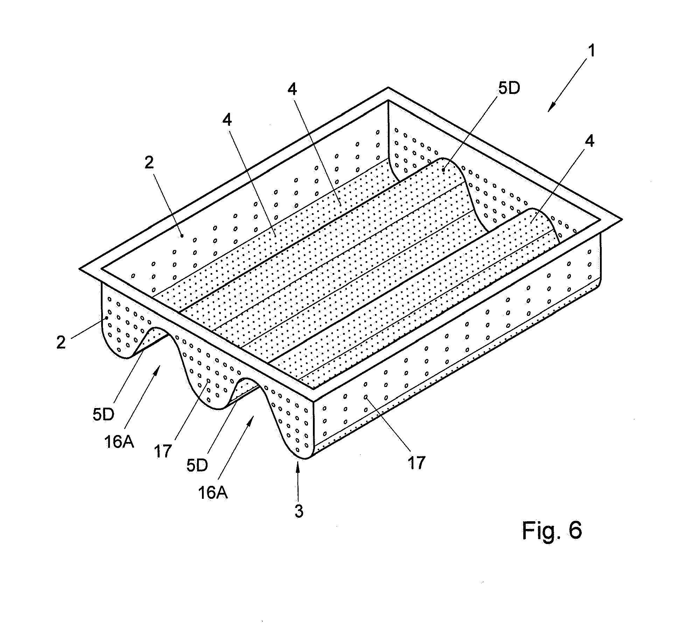

Instead of raised edges 5, also, projecting elements in the form of continuous ridges 5D can be provided, as shown in Fig. 6. With this, for instance, also elevations 16A are formed. The openings 4 may be formed by means of relatively small perforations.

Openings 4 may comprise holes, cut-outs, slots etc. The material of the plant tray 1 can also be somewhat air permeable, at least partly.

The plant tray 1 shown in the Figures is of square/elongated design in top plan view. Naturally, a plant tray 1 according to the invention can take different forms, for instance round, triangular, multiangular etc.

It is possible to keep, for instance, certain plants 8 in the tray 1 without medium 7, which may be favourable for some epiphytes 8 and/or in particular conditions. The edges 5 of the openings 4 may then be used, for instance, as support for the epiphytes 8.

These and many comparable variations, and combinations thereof, are understood to fall within the framework of the invention as outlined by the claims. Naturally, different aspects of different embodiments and/or combinations thereof can be combined and exchanged within the framework of the invention.

## Claims

1. A plant tray, in particular for epiphytes such as orchids, provided with at least one wall, a bottom and a space for a medium for epiphytes, which space is bounded, at least partly, by the wall and the bottom, the bottom being provided with openings at at least two different levels relative to the bottom.

2. A plant tray according to claim 1, wherein the bottom comprises at least one raised, projecting element which defines an opening.

3. A plant tray according to claim 2, wherein at least two sets of projecting elements are provided, with different lengths above a base surface of the bottom.

4. A plant tray according to claim 2 or 3, wherein at least a number of openings is provided approximately at the level of the base surface of the bottom.

5. A plant tray according to any one of the preceding claims, wherein at least a number of openings is higher than approximately one fifth part of the height of said at least one wall.

6. A plant tray according to any one of the preceding claims, wherein said openings are positioned according to an approximately regular pattern.

7. A plant tray according to any one of the preceding claims, wherein the openings are positioned according to an approximately regular, three-dimensional pattern.

8. A plant tray according to any one of the preceding claims, wherein at least two highest openings of approximately the same height are provided.

9. A plant tree according to any one of the preceding claims 2-8, wherein said projecting elements taper and/or a transition between the bottom and the projecting elements is rounded-off.

10. A plant tray according to any one of the preceding claims, wherein in the walls, second openings are provided.

11. A plant three according to any one of the preceding claims, wherein the bottom is provided with at least one elevation and/or depression.

12. A plant tray according to any one of the preceding claims, wherein the plant tray is manufactured from plastic.

13. A plant tray according to any one of the preceding claims, wherein the plant tray is integrally vacuum-formed.

14. A method for the use of plant tray according to any one of claims 1- 13, wherein the plant tray is filled, at least partly, with epiphyte growth medium, and epiphytes are placed in the growth medium, in particular for, inter alia, growing and transporting the epiphytes.

15. A method for forming a plastic plant tray, wherein a tray is vacuum-formed, provided with at least one wall, a bottom and a space, wherein in the bottom at least one projecting part is formed, while in the tray, openings are perforated at at least two different levels relative to the bottom.
